# EUROPEAN PATENT SPECIFICATION

(11) **EP 1 192 725 B1**
(45) Date of publication and mention of the grant of the patent: **02.12.2009**
(21) Application number: 00932503.6
(22) Date of filing: 16.05.2000
(51) Int. Cl.: H04B 1/40

(54) **MULTIPLE MODE RADIOTELEPHONES INCLUDING i GLUE /i CIRCUITS AND RELATED METHODS AND CIRCUITS**
MEHRMODENFUNKTELEFONE MIT KLEBERSCHALTUNGEN UND ZUGEHÖRIGEN VERFAHREN UND SCHALTUNGEN
RADIOTELEPHONES MULTIMODE COMPRENANT DES CIRCUITS DE LIAISON AINSI QUE DES PROCEDES ET DES CIRCUITS LES CONCERNANT

(30) Priority: 14.06.1999 US 332256
(43) Date of publication of application: 03.04.2002
(73) Proprietor: Ericsson Inc., Plano, TX 75024 (US)
(72) Inventor: CHENNAKESHU, Sandeep, Cary, NC 27513 (US); RYDBECK, Nils, Cary, NC 27511 (US)
(74) Representative: Stenborg, Anders Vilhelm
(86) International application number: PCT/US2000/013469
(87) International publication number: WO 2000/077940

(56) References cited:
- US-A- 5 210 785
- US-A- 5 309 502
- US-A- 5 497 507

## Description

### Field of the Invention

The present invention relates to the field of communications and more particularly to radiotelephone communications.

### Background of the Invention

Radiotelephone communications services are currently provided using a number of different communications standards. For example, cellular radiotelephone communications services are currently provided using the Global System for Mobile Communications (GSM) standard, the Digital Cellular System 1800 (DCS 1800) standard, the Advanced Mobile Phone System (AMPS IS-54) standard, the Digital Advanced Mobile Phone System (DAMPS IS-136) standard, the Direct Sequence-Code Division Multiple Access (DS-CDMA IS-95) standard, and the Personal Digital Cellular (PDC RCT-STD27) standard. Cordless radiotelephone communications are provided, for example, using the Cordless Telecommunications 3 (CT2 CAI) standard, the Digital European Cordless Telecommunications (DECT) standard, and the Personal Handy Phone Systems (PHS). Various radiotelephone communications standards are also provided for trunked radiotelephone systems and satellite radiotelephone systems.

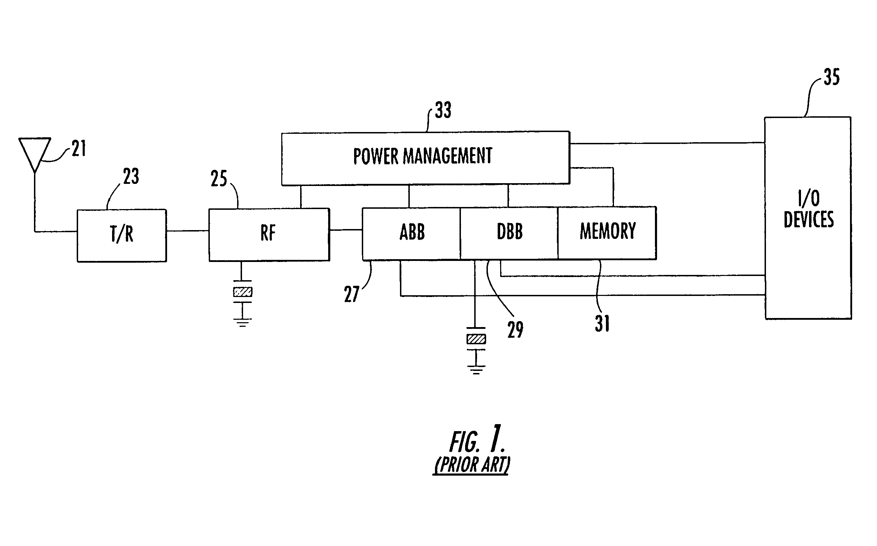

The various communications standards use sufficiently different communications protocols and frequency bands that different circuitry is typically used to implement phones for use according to the different communications standards. Accordingly, a conventional radiotelephone, such as the telephone illustrated in Figure 1, is designed to provide communications according to a single communications standard. As will be understood by those having skill in the art, the conventional radiotelephone of Figure 1 includes an antenna **21,** a transmit/receive separator **23,** a radio frequency circuit block **25,** an analog baseband circuit block **27,** a digital baseband circuit block **29,** a memory circuit block **31,** a power management circuit block **33,** and an input/output block **35.** While Figure 1 illustrates on example of a partitioning of a radiotelephone, other partitions are also possible. Accordingly, the conventional radiotelephone can provide communications according to a cellular communications standard, according to a cordless communications standard, according to a trunked communications standard, or according to a satellite communications standard, and a unique set of integrated circuit chips is typically used to implement phones according to the different standards.

Conventional radiotelephones, however, may be limited to operation according to only one communications standard thus limiting the coverage and service availability. For example, a radiotelephone for use with a relatively advanced digital communications standard such as DAMPS may have extensive service coverage in the Americas, but the service may not be widely available in Europe or Asia. Alternately, a satellite radiotelephone may provide a wider coverage than a cellular radiotelephone, but a cellular radiotelephone may be able to provide less expensive communications services and more robust performance within areas covered by a compatible cellular system.

Accordingly, a need has developed to provide multiple mode radiotelephones able to provide radiotelephone communications according to two or more radiotelephone communications standards. Multiple mode radiotelephones have thus been proposed to provide communications according to the AMPS and DAMPS standards, according to cellular and satellite standards, and according to cellular and cordless standards. The user of a multiple mode radiotelephone can thus choose to communicate according to two or more standards thereby increasing availability of service.

Two architectures have been proposed to provide multiple mode radiotelephones. According to a first architecture, a single integrated chip set including one or more Application Specific Integrated Circuits (ASICs) is used to provide the functionality of two or more radiotelephone communications standards. This approach may provide reduced cost for a mass produced multiple mode radiotelephone, reduced size, and reduced current drain.

With this approach, however, it may be difficult to provide a single master clock for use during both communications modes. For example, it would be convenient if the bandwidth, bit rates, and frame rates according to both communications standards have an integer relationship with respect to the single master clock. In other words, it may be difficult to select a single master clock to satisfy the needs of operation according to two communications standards.

The use of a single integrated chip set may take additional time to develop. In addition, more frequent upgrades to the integrated chip set may be required because different radiotelephone standards may evolve at different rates. A separate set of application specific integrated circuits (ASICs) may be needed for each multimode radiotelephone. A more flexible approach to combine standards may thus be desired.

A second architecture for a multiple mode phone combines a first chip set on a first circuit board providing communications according to a first radiotelephone communications standard with a second chip set on a second circuit board providing communications according to a second radiotelephone communications standard. This architecture may be difficult to implement because each chip set may include a different master clock generating a different frequency so that each master clock may interfere with the operation of the other chip set.

The input/output devices (providing a user interface or man/machine interface MMI) and other common circuitry, such as a ringer, speaker, microphone, backlighting, display, keypad, and system connector may be connected to the analog and digital baseband circuits (ASICs) of one of the chip sets on one of the circuit boards. Accordingly, the analog and digital baseband circuits of the second chip set may need to communicate with the baseband circuits of the first chip set. The baseband circuits may communicate using a serial bus, for example, via UARTs on each of the circuit boards with a protocol. A relatively complicated interboard connector may thus be needed to communicate audio information and commands between the two chip sets on the two circuit boards.

In addition, the radiotelephone antenna may be connected to only one of the circuit boards so that a radio path is needed between the two circuit boards further complicating the structure. Similar issues may also arise with respect to battery connections and connections to external devices. It may also be difficult to coordinate a phone book (phone numbers) between the two radiotelephone modes. In summary, this approach may require complicated interboard connections and communications, and multiple system clocks may cause interference.

U.S. Patent No. 5,309,502 to Harai entitled "Radio Telephone Having A Cordless Or Cellular Only Mode And A Cordless/Cellular Mode" discusses a radio telephone including a cordless telephone fixed set and a mobile set. U.S. Patent No. 5,497,507 to Komaki entitled "Portable Wireless Telephone Apparatus With Use Specific Power Monitoring" discusses a portable wireless telephone capable of providing a cellular mode and a cordless mode. U.S. Patent No. 5,210,785 to Sato et al. entitled "Wireless Communication System" discusses a wireless communication system which comprises plural wireless communication units having different communication protocols.

Accordingly, there continues to exist a need in the art for improved methods for developing multimode radiotelephones which allow flexibility for accommodating multiple combinations of radiotelephone standards.

### Summary of the Invention

It is therefore an object of the present invention to provide more flexible method for combining multiple radiotetephone modes and related circuits and radiotelephones.

This and other objects are provided according to the present invention by a multiple mode radiotelephone including a first chip set providing radiotelephone communications according to the first radiotelephone communications mode, a second chip set providing radiotelephone communications according to the second radiotelephone communications mode, a user interface, and a *glue* circuit. More particularly, the first chip set includes at least one integrated circuit chip, the second chip set includes at least one integrated circuit chip, and the first and second chip sets are distinct. The user interface accepts user input and provides user information. The *glue* circuit couples the user interface to the first chip set when providing radiotelephone communications according to the first radiotelephone communications mode, and the *glue* circuit couples the user interface to the second chip set when providing radiotelephone communications according to the second radiotelephone communications mode. The invention is defined in the claims.

According to the present invention, chip sets developed for single mode radiotelephones can be combined on a common circuit board using a *glue* circuit as an interface to common telephone elements such as the user interface. The *glue* circuit can also be used to coordinate operations of the two chip sets so that direct communications between the two chip sets is not needed. This solution allows each chip set to evolve independently with the corresponding standard.

The user interface can include a microphone and a speaker. Accordingly, the microphone accepts sound for transmission through the first chip set when providing radiotelephone communications according to the first radiotelephone communications mode, and the microphone accepts sound for transmission through the second chip set when providing radiotelephone communications according to the second radiotelephone communications mode. Similarly, the speaker generates sound responsive to radiotelephone communications received through the first chip set when providing radiotelephone communications according to the first radiotelephone communications mode, and the speaker generates sound responsive to radiotelephone communications received through the second chip set when providing radiotelephone communications according to the second radiotelephone communications mode.

In addition, the first and second chip sets can be provided on a common circuit board thereby reducing the complexity of connections between the chip sets and the *glue* circuit. Furthermore, the user interface can include a keypad and/or a display on a second circuit board to facilitate the placement of the first and second chip sets and the *glue* circuit on the first circuit board. A relatively simple interboard connection can thus be provided between the *glue* circuit on the first circuit board and the second circuit board including the keypad and/or the display.

The first chip set can include a first high frequency master clock providing a first clock signal, and the second chip set can include a second high frequency master clock providing a second clock signal. Moreover, the first high frequency master clock can be turned off when providing radiotelephone communications according to the second radiotelephone communications mode, and the second high frequency master clock can be turned off when providing radiotelephone communications according to the first radiotelephone communications mode. Accordingly, interference between the two chip sets can be reduced.

The first and second radiotelephone communications modes can be chosen, for example, from the group of communications modes including cellular communications modes, satellite communications modes, trunked communications modes, and cordless communications modes. For example, the first and second radiotelephone communications modes can be different cellular communications modes, or the first radiotelephone communications mode can be a cellular communications mode and the second radiotelephone communications mode can be a satellite communications mode. A multimode radiotelephone according to the present invention can also provide communications according to three or more communications modes. For example, the radiotelephone can include three chip sets providing communications according to three respective communications modes.

### Brief Description of the Drawings

Figure 1 is a block diagram illustrating a conventional single mode radiotelephone.
Figure 2 is a block diagram illustrating a multiple mode radiotelephone including separate chip sets for each communications mode and a *glue* circuit according to the present invention.
Figure 3 is a block diagram of an example of a *glue* circuit according to Figure 2.
Figure 4 is a block diagram of an example of a chip set according to Figure 2.

### Detailed Description

The present invention will now be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

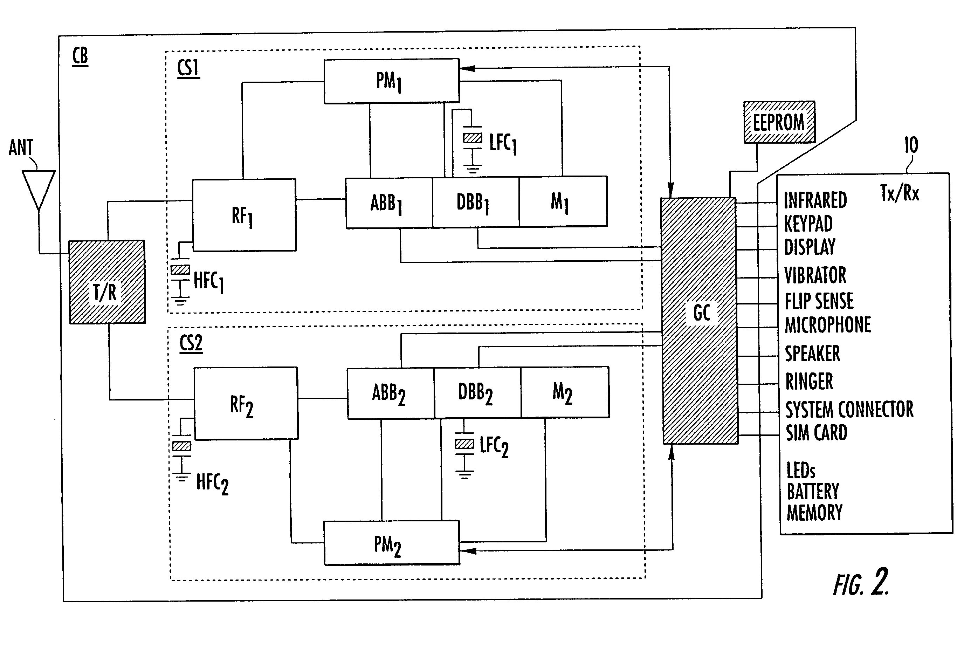

As shown in Figure 2, a multiple mode radiotelephone according to the present invention can include a first chip set **CS1** that provides radiotelephone communications according to a first radiotelephone communications mode and a second chip set **CS2** that provides radiotelephone communications according to a second radiotelephone communications mode, and the two chip sets can be provided on a common printed circuit board **CB.** The first chip set **CS1** can include one or more integrated circuits providing the radio frequency circuit block RF1, the analog baseband circuit block **ABB1,** the digital baseband circuit block **DBB1,** the memory circuit block **M1,** and the power management circuit block **PM1;** and the second chip set **CS2** can include one or more integrated circuits providing the radio frequency circuit block **RF2,** the analog baseband circuit block **ABB2,** the digital baseband circuit block **DBB2,** the memory circuit block **M2,** and the power management circuit block **PM2.** This chip set partitioning is one of multiple possible partitionings.

Moreover, the first and second chip sets are preferably distinct in that the integrated circuit devices used to provide the circuit blocks of the first chip set and the integrated circuit devices used to provide the circuit blocks of the second chip set are not all the same. Furthermore, the circuit blocks of each of the first and second chip sets can be provided in one or more integrated circuit devices as will be understood by those having skill in the art. For example, each of the circuit blocks **RF1, ABB1, DBB1, M1,** and **PM1** of the first chip set **CS1** can be provided within an integrated circuit device, multiple circuit blocks can be provided within an integrated circuit device, and/or the circuitry of a block can be divided between two or more integrated circuit devices.

In addition, each of the chip sets can also include discrete components such as resistors; capacitors; inductors; filters; diodes; quartz crystals; and/or piezoelectric elements. While each of the chip sets **CS1** and **CS2** is shown occupying separate areas of the circuit board **CB,** it will be understood that the integrated circuits making up the respective chip sets can be arranged on the circuit board as may be useful, for example, to provide interconnections and/or to provide space for the various components on the circuit board.

Each of the chip sets may also include respective high frequency clocks **HFC1** and **HFC2** and low frequency clocks **LFC1** and **LFC2,** and each of these clocks can be provided within an integrated circuit of the respective chip set, and/or one or more of the clocks can be provided discretely. While each of the clocks is shown separate from the respective circuit blocks for purposes of illustration, the high frequency clocks **HFC1** and **HFC2** can be considered parts of the respective radio frequency circuit blocks **RF1** and **RF2,** and the low frequency clocks **LFC1** and **LFC2** can be considered parts of the respective digital baseband circuit blocks **DBB1** and **DBB2.**

By providing separate high frequency clocks of different frequencies, the radio frequency circuit blocks of each chip set can be designed independently. In addition, interference can be reduced by turning each high frequency clock off when the other chip set is being used to provide communications. Accordingly, communications can be provided using the first chip set **CS1** without significant interference from the second high frequency clock **HFC2** by turning the second high frequency clock off, and communications can be provided using the second chip set **CS2** without significant interference from the first high frequency clock HFC1 by turning the first high frequency clock off.

For example, operations can be transferred from the first chip set **CS1** providing communications according to the first radiotelephone communications mode to the second chip set **CS2** providing communications according to the second radiotelephone communications mode as discussed below. First, a sleep mode command can be generated by digital baseband circuit block **DBB1** responsive to the *glue* circuit **GC,** and this sleep mode command can be provided to the radio frequency circuit block **RF1**. Responsive to the sleep mode command, the radio frequency circuit block **RF1** can turn the first high frequency clock **HFC1** off. In the sleep mode, the low frequency clock **LFC1** can be turned on to facilitate sleep mode operations of the first chip set **CS1** during the transfer of operations while reducing possible interference.

Second, the second chip set **CS2** is powered on. In particular, an active mode command can be generated by the digital baseband circuit **DBB2** responsive to the *glue* circuit **GC,** and this active mode command can be provided to the radio frequency circuit block **RF2.** Responsive to the active mode command, the radio frequency circuit block **RF2** can turn the second high frequency clock **HFC2** on. The second chip set **CS2** can then establish communications according to the second radiotelephone communications mode by finding an available channel. Upon establishing communications according to the second radiotelephone communications mode, power can be removed from the first chip set **CS1,** thereby reducing battery drain.

Alternatively, if the second chip set **CS1** is unable to establish communications according to the second radiotelephone communications mode, operations can be transferred back to the first chip set **CS1.** According to yet another alternative, both chip sets can be put in a sleep mode. As will be understood, the transfer of operations from the second chip set **CS2** to the first chip set **CS1** is the same as the transfer from the first chip set **CS1** to the second chip set **CS2** discussed above. Commands from the *glue* chip **GC** to the power management circuit blocks **PM1** and **PM2** can thus be used to coordinate operations of the first and second circuit blocks **CS1** and **CS2.**

When one chip set is being used to provide communications, the other chip set is preferably put in a sleep mode with its high frequency clock turned off to reduce interference. The low frequency clock can be used to operate the baseband circuit blocks of the chip set in the sleep mode. For example, a low frequency clock with a 32 KHz output will provide insignificant interference with respect to a radio frequency circuit block including a high frequency clock with an output in the range of 10MHz to 20MHz. Furthermore, the low frequency clock of the chip set in the sleep mode can also be turned off upon completion of transfer of operation to the active chip set.

As shown in Figure 2, the *glue* circuit **GC** is preferably provided on the circuit board **CB** together with the first and second chip sets **CS1** and **CS2,** and the *glue* circuit is used to coordinate the operations of the two chip sets and to provide a common interconnection to the input/output **IO** devices (user interface). The *glue* circuit **GC** is preferably implemented using one or more integrated circuit devices distinct from the integrated circuit devices used to implement the first and second chip sets **CS1** and **CS2.** The *glue* circuit can also include discrete components. Accordingly, the radiotelephone communications chip sets can be developed separately and used in single mode radiotelephones without significant modification when used with a multiple mode radiotelephone including the *glue* circuit **GC** according to the present invention. Furthermore, by providing the first and second chip sets **CS1** and **CS2** and the *glue* circuit **GC** on the common circuit board **CB,** the complexity of interconnections therebetween can be reduced.

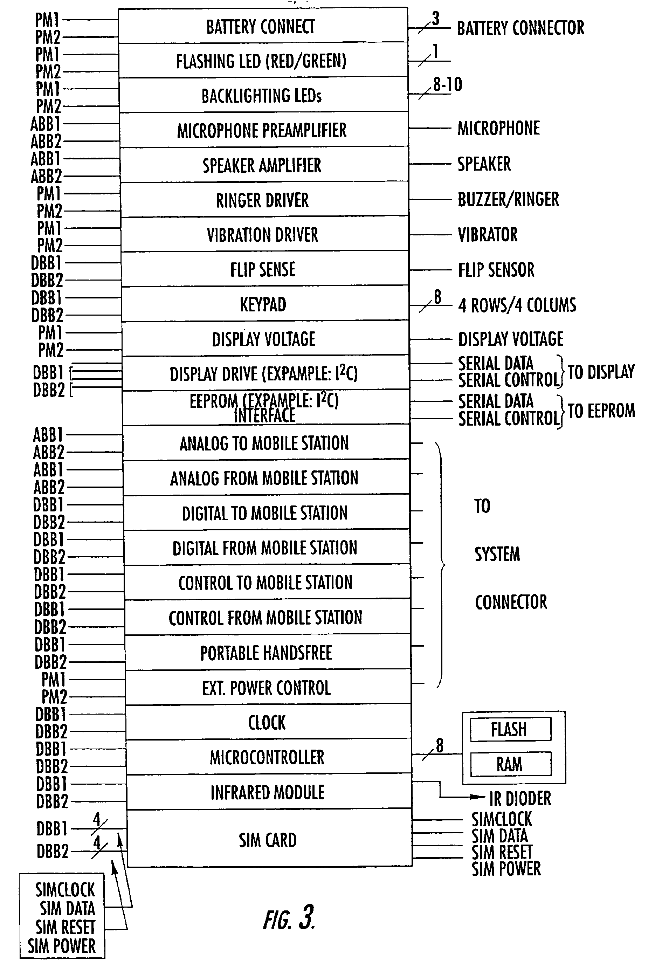

As discussed above, the *glue* circuit coordinates the operation of the two chip sets. In the current configuration, for example, when switching from a first mode of radiotelephone communications using the first chip set **CS1** to a second mode of radiotelephone communications using the second chip set **CS2,** the *glue* circuit GC coordinates the operations of the digital baseband circuit blocks **DBB1** and **DBB2** to send commands to the RF circuit blocks **RF1** and **RF2,** respectively, to turn the first high frequency clock **HFC1** off and to turn the second high frequency clock **HFC2** on. At the same time, the power management blocks **PM1** and **PM2** can also turn on/off power to the respective RF circuit blocks in the appropriate sequence. In particular, the power to an RF circuit block can be turned off after turning off the respective high frequency clock, and the power to a respective RF circuit block can be turned on before turning on the respective high frequency clock. The glue circuit **GC** also coordinates the operations of the low frequency clocks **LFC1** and **LFC2** as needed to facilitate the transfer. In this example, the *glue* circuit **GC** also switches from being an interface between the first chip set **CS1** and the input/output **IO** devices, to being an interface between the second chip set **CS2'** and the input/output **IO** devices. In addition, the *glue* circuit **GC** provides timing signals as needed from the active chip set to the input/output IO devices for operation thereof. The *glue* circuit is illustrated in greater detail in Figure 3.

A common transmit/receive separator **T/R** can also be provided on the common circuit board **CB** as shown in Figure 2. Accordingly, a single connection between the antenna **ANT** and the circuit board **CB** can be provided, and the transmit/receive separator T/R can provide coupling between the antenna and the first and second radio frequency circuit blocks **RF1** and **RF2** of the respective first and second chip sets. Alternately, the antenna can be a multiband antenna with a feed point on the circuit board for each radiotelephone communications mode and chip set. In either case, the placement of both chip sets on the common circuit board can reduce the complexity of antenna connections. The placement of both chip sets **CS1** and **CS2** on the common circuit board can also reduce the complexity of other connections such as battery connections and other system connections.

As discussed above, a multiple mode radiotelephone according to the present invention also includes input/output **IO** devices such as an infrared transmitter and/or receiver, a keypad, a display, a vibrator, a flip position sensor, a microphone, a speaker, a ringer, a system connector, light emitting diodes, and/or a SIM card. Moreover, one or more of these devices such as the keypad and/or display can be provided on an **IO** circuit board separate from the common circuit board **CB.**

The software (lower level hardware drivers and protocol stacks) for both of the chip sets **CS1** and **CS2** supporting the two radiotelephone communications modes can be substantially the same as that used in chip sets used for single mode radiotelephones adapted to one or the other of the radiotelephone communications modes. Additional software can be developed for the *glue* circuit GC to support transitions from one communication mode to another and to facilitate access to the input/output **IO** devices. In addition, the *glue* circuit can be controlled via a protocol that allows the addition of processors to a virtual port and that allows piping data to and from this port to the main controllers. A common man machine interface software for both modes of operation can be provided which interfaces to the two protocol stacks via a suitable application programming interface (API).

Directories including telephone numbers can be accommodated by transferring the information to the active chip set through the *glue* circuit. For example, a common electrically erasable programmable read only memory **EEPROM** can be coupled with the *glue* circuit to store telephone numbers for use in either communications mode. Alternately, random access memory RAM can be included in the *glue* circuit, and entries can be copied from EEPROM on one chip set to EEPROM of the other chip set. If the phone has a subscriber identity module (SIM) card, such as used in GSM, the memory of this card can be used to store telephone numbers.

The architecture of the present invention provides flexibility for multimode radiotelephones by providing a *glue* circuit that allows the inclusion of two or more separate chip sets on a single circuit board. Each chip set supports radiotelephone communications according to a different radiotelephone communications standard, so that each chip set can be used individually in a single mode radiotelephone with few changes. Accordingly, changes in each of the radiotelephone communications standards can be accommodated by changing one chip set or the other, and the same chip sets can be used to support single and multimode radiotelephones. In addition, current drain can be reduced by turning one chip set off when the other chip set is being used.

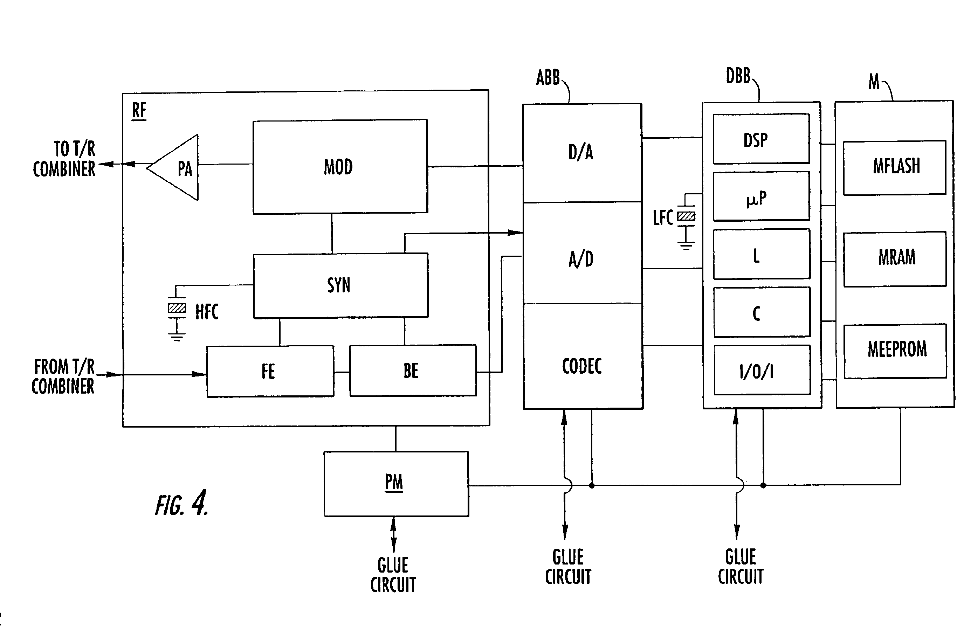

The operation of circuit blocks of one chip set will now be discussed in greater detail with reference to Figure 4 under the condition that the chip set is activated. As discussed above, the chip set is put in a sleep mode or turned off when communications are being provided by the other chip set of the radiotelephone. As previously discussed, each radiotelephone chip set can include a radio frequency circuit block RF, an analog baseband circuit block **ABB,** a digital baseband circuit block **DBB,** memory circuit block **M,** and a power management circuit block **PM.** The digital baseband circuit block DBB can include a microprocessor µ**P,** a digital signal processor **DSP,** and logic **L** to control the radiotelephone and to perform signal processing functions such as modulation waveform generation, demodulation or part thereof, and speech compression.

The digital baseband circuit block can also include a timing control block **C** that sequences all events in the radiotelephone including turning the different circuit functions on and off. An input/output interface I/O/I is coupled with the *glue* circuit **GC** and this interface can accept inputs from the keypad, send data to the display, and generate a ring tone for the buzzer. The input/output interface I/O/I can also interface with the system connector through the *glue* circuit, and accept binary responses such as the output of the flip position sensor. If the phone has infrared (IR) capabilities, IR transmission and reception can be controlled through the input/output interface.

In addition, the low frequency clock LFC can be considered a part of the digital baseband circuit block, and the digital baseband circuit block can use the output of the low frequency clock to provide timing signals for the chip set, the *glue* circuit, and the input/output device when the chip set is activated and/or when radiotelephone operation is being transferred to and/or from the chip set. As discussed above, the high frequency clock HFC of the radio frequency circuit block can be turned off when the chip set is not activated.

The analog baseband circuit block **ABB** can include a digital-to-analog converter **D/A,** an analog-to-digital converter **A/D,** and an audio **CODEC.** The **D/A** and **A/D** converters and the **CODEC** can alternately be considered a part of the digital baseband circuit block **DBB.** The **CODEC,** for example, can be coupled with a microphone preamplifier and a speaker amplifier in the *glue* circuit as shown in Figure 3.

The analog baseband circuit block **ABB** also provides an interface among the digital baseband circuit block **DBB** and the radio frequency circuit block **RF** and the speaker and microphone. Analog speech signals from the microphone can be sampled by the **A/D** converter, converted to 64Kbps data by the CODEC, and sent to the digital baseband circuit block. This data can be compressed and sent to the **D/A** converter in the analog baseband circuit block and then sent to the modulator **Mod.**

Status information to and from the radio frequency circuit block **RF** such as power values and received signal strength can be provided as analog signals to the analog baseband circuit block. This information can be sampled by the **A/D** converter and sent to the digital baseband circuit block for further processing. Similarly, control information such as frequency correction, gain control, power control, etc. can be provided by the **D/A** converter to the radio frequency circuit block **RF.**

The chip set memory circuit block **M** can include flash memory **MFlash** used to store software, and random access memory **MRAM** used to store data for processing. The chip set can also include an electrically erasable programmable read only memory **MEEPROM** used to store key variables such as number assignment modules, service profiles, preferred roaming lists (databases), etc. The **MEEPROM** can also be used to store parameters such as calibration numbers programmed in the factory. The memory circuit block **M** can also be used to store user entered data such as user preferences and directory information. The directory information can alternately be stored in memory associated with the *glue* chip for use by either chip set. As shown, the memory circuit block **M** can be accessed through the digital baseband circuit block DBB, and coupling between the memory circuit block **M** and the *glue* chip can be provided through the digital baseband circuit block **DBB.**

The power management circuit block **PM** can include regulators to provide a steady voltage supply to all of the integrated circuits of the chip set. It can also control charging of the battery when the chip set is activated. The power management circuit block **PM** can also control display backlighting and drive the ringer or the buzzer through the *glue* circuit.

As shown, the radio frequency circuit block **RF** can include a modulator **Mod,** a synthesizer **Syn,** an RF front end **FE,** a power amplifier **PA,** and an IF back end **BE.** The information to be transmitted is converted to analog form and filtered using the **D/A** converter of the analog baseband circuit block, and the resulting waveform is upconverted to a high frequency by the modulator **Mod** to provide an information bearing waveform called a modulated carrier. The power amplifier **PA** amplifies this modulated carrier for transmission through the transmit/receive separator **T/R** and antenna **ANT.** As discussed above, the transmit/receive separator and antenna can be provided separate from the chip set.

The synthesizer **Syn** generates the frequency for the chip set when the chip set is active. The synthesizer **Syn** synthesizes the transmit frequency and the receive frequency based on the output of the high frequency clock **HFC.** As discussed above, the high frequency clock can be turned off when the chip set is not activated thereby reducing interference.

The RF front end **FE** amplifies the incoming radio signal from the antenna **ANT** and the transmit/receive separator **T/R,** mixes the incoming radio signal down to a suitable frequency, and filters the signal to reduce interference. The IF back end **BE** converts the signal from the RF front end to a baseband signal that is filtered and sent to the analog baseband circuit block where the baseband signal is digitized using the **A/D** converter. The digitized signal is then sent to the digital baseband circuit block **DBB** for processing.

The transmit/receive separator **T/R** of Figure 2 provides coupling between the antenna **ANT** and both of the chip sets **CS1** and **CS2.** The transmit/receive separator can be provided by a system of filters and/or switches. By providing a single transmit/receive separator **T/R** on the circuit board **CB** with the first and second chip sets **CS1** and **CS2,** a single connection can be provided between the antenna **ANT** and the circuit board **CB.**

The structure of the *glue* circuit **GC** will now be discussed in greater detail with reference to Figure 3. The *glue* circuit **GC** can include a relatively simple microcontroller and associated memory wherein the microcontroller and memory in conjunction with the main microprocessors in the digital baseband circuit blocks of the activated chip set. The memory coupled to the microcontroller can include Flash memory and/or random access memory RAM as shown in Figure 3. The microcontroller can coordinate the communications handoff where one chip set is brought up and the other chip set is taken down to provide a change in radiotelephone operation modes. The microcontroller can also handle interprocessor communications, multiplexing, and demultiplexing as discussed in greater detail below.

The *glue* circuit GC coordinates operations of the power management circuit blocks of the chip sets through the Battery Connect. In particular, the *glue* circuit **GC** multiplexes power to the power management circuit block of the activated chip set. During chip set hand off, the *glue* circuit coordinates the power up and power down of the power management circuit blocks. Preferably, the multiplexing of the battery power is provided so that there is an insignificant voltage drop across the *glue* circuit. The *glue* circuit also multiplexes the drive signal to the light emitting diodes for the radiotelephone from the power management circuit block of the activated chip set.

A demultiplexer within the *glue* circuit connects the keypad to the digital baseband circuit block of the activated chip set, and this connection is set based on the mode status. Similarly, a multiplexer within the *glue* circuit connects the display to the digital baseband circuit block of the activated chip set. This multiplexer receives two serial inputs (two lines each such as data and control) from each digital baseband circuit block, and these inputs are multiplexed to the display.

Another multiplexer in the *glue* circuit supplies a voltage for the display from one of the two power management circuit blocks. A preamplifier in the *glue* circuit couples the analog baseband circuit block of the activated chip set to the microphone, and an audio preamplifier in the *glue* circuit couples the analog baseband circuit of the activated chip set to the speaker.

Coupling of the system connector (including analog, digital, control, and power signal pins) to and from the radiotelephone is also provided by the *glue* circuit GC. The analog signals (Analog to and from the mobile station) are multiplexed to the analog baseband circuit blocks; the digital signals (Digital to and from the mobile station) and the control signals (Control to and from the mobile station) are multiplexed to UARTS in the digital baseband circuit blocks; and the power signals are multiplexed to the power management circuit blocks. This multiplexing can be set by the *glue* circuit microcontroller as a function of the radiotelephone communications mode being used. External modules such as a short range wireless radio module can be controlled/connected through similar connections.

A serial interface in the *glue* circuit can be used to provide connection between the EEPROM of Figure 2 and the two chip sets. Accordingly, a phone book or a directory of telephone numbers can be stored in the EEPROM and provided to the active chip set. Accordingly, a common directory can be provided for both chip sets.

The flip sensor binary input/output line can also be multiplexed through the *glue* circuit to the digital baseband circuit block of the active chip set, and the drive control signal to the vibrator motor can be multiplexed from the digital baseband circuit block of the active chip set to the vibrator motor. In addition, data can be multiplexed by the *glue* circuit between an infrared link control module and the digital baseband circuit block of the active chip set.

The *glue* circuit can also receive clock signals from both of the digital baseband circuit blocks of both chip sets to synchronize the microcontroller of the *glue* circuit and to manage and control handoffs from one chip set to the other. Interprocessor communications between the *glue* circuit and the first and second chip sets can be provided using serial and/or parallel bus connections provided on the common circuit board. In addition, the *glue* circuit can include a multiplexer to multiplex signals between the digital baseband circuit block of the active chip set and a SIM card of the radiotelephone. For example, typical SIM cards have four connections for clock, power, data, and reset. If one of the two chip sets does not use a SIM card, SIM card connections between that chip set and the *glue* circuit will not be provided.

The *glue* circuit of Figures 2 and 3 can be implemented as one or more integrated circuit devices distinct from the integrated circuit devices used to implement the first and second chip sets. More particularly, the *glue* circuit can be implemented as one or more application specific integrated circuit devices. The *glue* circuit can also include discrete circuits. Accordingly, a first chip set can be used to provide radiotelephone communications according to a first radiotelephone communications standard, a second chip set can be used to provide radiotelephone communications according to a second communications standard, and a separate *glue* circuit can be used to coordinate the operations of the two chip sets and to provide connections between the chip sets and common radiotelephone elements.

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. A multiple mode radiotelephone providing radiotelephone communications using at least first and second radiotelephone communications modes, the multiple mode radiotelephone comprising:
a first chip set (CS1) providing radiotelephone communications according to the first radiotelephone communications mode wherein the first chip set (CS1) includes at least one integrated circuit chip;
a second chip set (CS2) providing radiotelephone communications according to the second radiotelephone communications mode wherein the second chip set (CS2) comprises at least one integrated circuit chip wherein the first (CS1) and second (CS2) chip sets are distinct from one another;
a user interface (IO) that accepts user input and provides user information; and
a glue circuit (GC) that couples the user interface (IO) to the first chip set (CS1) when providing radiotelephone communications according to the first radiotelephone communications mode without coupling to the second chip set (CS2), and that couples the user interface (IO) to the second chip set (CS2) when providing radiotelephone communications according to the second radiotelephone communications mode without coupling to the first chip set (CS1), the multiple mode radiotelephone further
**characterized by** that said glue circuit (GC) comprises a microcontroller configured to receive low frequency clock signals generated in low frequency clocks (LFC1, LFC2) from both the first and the second chip sets (CS1, CS2) to synchronize the microcontroller; and to coordinate communications handoffs from one chip set to the other.

2. A multiple mode radiotelephone according to claim 1 wherein the user interface (IO) includes:
a microphone that accepts sound for transmission through the first chip set (CS1) when providing radiotelephone communications according to the first radiotelephone communications mode, and that accepts sound for transmission through the second chip set (CS2) when providing radiotelephone communications according to the second radiotelephone communications mode; and
a speaker that generates sound responsive to radiotelephone communications received through the first chip set (CS1) when providing radiotelephone communications according to the first radiotelephone communications mode, and that generates sound responsive to radiotelephone communications received through the second chip set (CS2) when providing radiotelephone communications according to the second radiotelephone communications mode.

3. A multiple mode radiotelephone according to claim 1 or 2, further comprising:
a circuit board (CB) wherein both the first and the second chip sets (CS1, CS2) are provided on the circuit board (CB).

4. A multiple mode radiotelephone according to claim 3 wherein the user interface (IO) comprises at least one of a keypad and a display, the multiple mode radiotelephone further comprising:
a second circuit board separate from the first circuit board (CB)
wherein at least one of the keypad and the display is provided on the second circuit board.

5. A multiple mode radiotelephone according to any of claims 1-4:
wherein the first chip set (CS1) includes a first high frequency master clock (HFC1) providing a first clock signal;
wherein the second chip set (CS2) includes a second high frequency master clock (HFC2) providing a second clock signal; and
wherein the first high frequency master clock (HFC1) is turned off when providing radiotelephone communications according to the second radiotelephone communications mode and wherein the second high frequency master clock (HFC2) is turned off when providing radiotelephone communications according to the first radiotelephone communications mode.

6. A multiple mode radiotelephone according to any of claims 1-5,
wherein the first and second radiotelephone communications modes are chosen from the group consisting of cellular communications modes, satellite communications modes, trunked communications modes, and cordless communications modes.

7. A multiple mode radiotelephone according to any of claims 1-6: wherein the first chip set (CS 1) includes a first radio frequency circuit (RF1); and the second chip set (CS2) includes a second radio frequency circuit (RF2).

8. A multiple mode radiotelephone according to claim 7:
wherein the first chip set (CS1) further includes a first analog baseband circuit (ABB1), a first digital baseband circuit (DBB1), and a first memory (M1); and
wherein the second chip set (CS2) further includes a second analog baseband circuit (ABB2), a second digital baseband circuit (DBB2), and a second memory (M2).

9. A multiple mode radiotelephone according to any of claims 1-8, further comprising a memory (EEPROM) containing a common directory for both chip sets (CS1, CS2) via the glue circuit (GC).

10. A method for operating a multiple mode radiotelephone comprising:
providing radiotelephone communications according to a first radiotelephone communications mode through a first chip set (CS1) wherein the first chip set (CS 1) includes at least one integrated circuit chip;
providing radiotelephone communications according to a second radiotelephone communications mode through a second chip set (CS2) wherein the second chip set (CS2) includes at least one integrated circuit chip and wherein the first (CS1) and second (CS2) chip sets are distinct from one another;
accepting user input;
providing user information;
coupling user input and user information to and from the first chip set (CS 1 ) when providing radiotelephone communications according to the first radiotelephone communications mode without coupling to the second chip set (CS2); and
coupling user input and user information to and from the second chip set (CS2) when providing radiotelephone communications according to the second radiotelephone communications mode without coupling to the first chip set (CS1)
**characterized by**
using low frequency clock signals generated in low frequency clocks (LFC1, LFC2) from both the first and the second chip sets (CS 1, CS2) for synchronizing a microcontroller that coordinates communications handoffs from one chip set to the other.

11. A method according to claim 10, wherein providing radiotelephone communications according to the first radiotelephone communications mode comprises using a first high frequency clock signal generated by the first high frequency clock (HFC1), and wherein providing radiotelephone communications according to the second radiotelephone communications mode comprises using a second high frequency clock signal generated by the second high frequency clock (HFC2), the method further comprising:
turning the second high frequency clock (HFC2) off when providing communications according to the first radiotelephone communications mode; and
turning the first high frequency clock (HFC1) off when providing communications according to the second radiotelephone communications mode.

12. A method according to claim 10 or 11, further comprising the steps of:
accepting sound for transmission through the first chip set (CS1) when providing radiotelephone communications according to the first radiotelephone communications mode;
accepting sound for transmission through the second chip set (CS2) when providing radiotelephone communications according to the second radiotelephone communications mode;
generating sound responsive to radiotelephone communications received through the first chip set (CS1) when providing radiotelephone communications according to the first radiotelephone communications mode; and
generating sound responsive to radiotelephone communications received through the second chip set (CS2) when providing radiotelephone communications according to the second radiotelephone communications mode.

13. A method according to any of claims 10-12, wherein the first and second radiotelephone communications modes are chosen from the group consisting of cellular communications modes, satellite communications modes, trunked communications modes, and cordless communications modes.

14. A method according to any of claims 10-13, wherein said method further comprises providing a common directory from a memory (EEPROM) for both chip sets (CS1, CS2).

15. A glue circuit for a multiple mode radiotelephone comprising a first chip set (CS1) providing radiotelephone communications according to the first radiotelephone communications mode wherein the first chip set (CS1) includes at least one integrated circuit chip; a second chip set (CS2) providing radiotelephone communications according to the second radiotelephone communications mode wherein the second chip set (CS2) comprises at least one integrated circuit chip wherein the first (CS2) and second (CS2) chip sets are distinct from one another; a user interface (IO) that accepts user input and provides user information, said glue circuit comprises :
- means to couple the user interface (IO) to the first chip set (CS1) when providing radiotelephone communications according to the first radiotelephone communications mode without coupling to the second chip set (CS2), and
- means to couple the user interface (IO) to the second chip set (CS2) when providing radiotelephone communications according to the second radiotelephone communications mode without coupling to the first chip set (CS1),
**characterized in that** said glue circuit (GC) comprises a microcontroller configured to receive low frequency clock signals generated in low frequency clocks (LFC1, LFC2) from both the first and the second chip sets (CS 1, CS2) to synchronize the microcontroller; and to coordinate communications handoffs from one chip set to the other.

16. The glue circuit according to claim 15, wherein the first chip set (CS1) includes a first high frequency master clock (HFC1) providing a first clock signal, and wherein the second chip set (CS2) includes a second high frequency master clock (HFC2) providing a second clock signal; the glue circuit further comprising:
means to turn the first high frequency master clock (HFC1) off when providing radiotelephone communications according to the second radiotelephone communications mode; and
- means to turn the second high frequency master clock (HFC2) off when providing radiotelephone communications according to the first radiotelephone communications mode.

17. The glue circuit according to claim 15 or 16, wherein the glue circuit (GC) is provided with a serial interface to provide connection between a memory (EEPROM) and the two chip sets (CS1, CS2), said memory (EEPROM) containing a common directory for both chip sets (CS1, CS2).

## Patentansprüche

1. Funksprechgerät mit mehreren Modi, das Funksprechkommunikation bereitstellt, die mindestens den ersten und den zweiten Funksprechkommunikationsmodus verwendet,
wobei das Funksprechgerät mit mehreren Modi Folgendes umfasst:
einen ersten Chipsatz (CS1), der Funksprechkommunikation gemäß dem ersten Funksprechkommunikationsmodus bereitstellt, wobei der erste Chipsatz (CS1) mindestens einen integrierten Schaltungschip enthält;
einen zweiten Chipsatz (CS2), der Funksprechkommunikation gemäß dem zweiten Funksprechkommunikationsmodus ermöglicht, wobei der zweite Chipsatz (CS2) mindestens einen integrierten Schaltungschip enthält und wobei sich der erste (CS1) und der zweite (CS2) Chipsatz voneinander unterscheiden;
eine Benutzerschnittstelle (IO), die Benutzereingaben akzeptiert und Benutzerinformationen zur Verfügung stellt, und
eine Schnittstellenschaltung (GC), die die Benutzerschnittstelle (IO) mit dem ersten Chipsatz (CS1) ohne Verbindung mit dem zweiten Chipsatz (CS2) verbindet, wenn Funksprechkommunikation gemäß dem ersten Funksprechkommunikationsmodus bereitgestellt wird, und die die Benutzerschnittstelle (IO) mit dem zweiten Chipset (CS1) ohne Verbindung mit dem ersten Chipset (CS2) verbindet, wenn Funksprechkommunikation gemäß dem zweiten Funksprechkommunikationsmodus bereitgestellt wird, wobei das Funksprechgerät mit mehreren Modi weiterhin
**dadurch gekennzeichnet ist, dass** die Schnittstellenschaltung (GC) eine Mikroprozesssteuerung umfasst, die so konzipiert ist, dass sie von Niederfrequenz-Taktgebern (LFC1, LFC2) erzeugte, niederfrequente Taktsignale von sowohl dem ersten als auch dem zweiten Chipsatz (CS1, CS2) empfangen kann, um die Mikroprozesssteuerung zu synchronisieren, und so, dass sie die Kommunikationsweitergabe von einem Chipsatz zum nächsten koordinieren kann.

2. Funksprechgerät mit mehreren Modi nach Anspruch 1, wobei die Benutzerschnittstelle (IO) Folgendes umfasst:
ein Mikrofon, das Klang zur Übertragung mittels des ersten Chipsatzes (CS1) aufnimmt, wenn Funksprechkommunikation gemäß dem ersten Funksprechkommunikationsmodus bereitgestellt wird, und das Klang zur Übertragung mittels des zweiten Chipsatzes (CS2) aufnimmt, wenn Funksprechkommunikation gemäß dem zweiten Funksprechkommunikationsmodus bereitgestellt wird, und
ein Lautsprecher, der Klang aufgrund einer Funksprechkommunikation erzeugt, der mittels des ersten Chipsatzes (CS1) empfangen wird, wenn Funksprechkommunikation gemäß dem ersten Funksprechkommunikationsmodus bereitgestellt wird, und der Klang aufgrund einer Funksprechkommunikation erzeugt, der mittels des zweiten Chipsatzes (CS2) empfangen wird, wenn Funksprechkommunikation gemäß dem zweiten Funksprechkommunikationsmodus bereitgestellt wird.

3. Funksprechgerät mit mehreren Modi nach Anspruch 1 oder 2, das weiterhin Folgendes umfasst:
eine Schaltplatte (CB), wobei sowohl der erste als auch der zweite Chipsatz (CS1; CS2) auf der Schaltplatte (CB) angeordnet ist.

4. Funksprechgerät mit mehreren Modi nach Anspruch 3, wobei die Benutzerschnittstelle (IO) mindestens ein Tastenfeld und/oder eine Anzeige umfasst, wobei das Funksprechgerät mit mehreren Modi weiterhin Folgendes umfasst:
eine zweite Schaltplatte, die von der ersten Schaltplatte (CB) getrennt ist, wobei mindestens ein Tastenfeld und/oder eine Anzeige auf der zweiten Schaltplatte angeordnet ist.

5. Funksprechgerät mit mehreren Modi nach einem der Ansprüche 1-4:
wobei der erste Chipsatz (CS1) einen ersten Hochfrequenz-Haupttaktgeber (HFC1) beinhaltet, der ein erstes Taktsignal bereitstellt;
wobei der zweite Chipsatz (CS2) einen zweiten Hochfrequenz-Haupttaktgeber (HFC2) beinhaltet, der ein erstes Taktsignal bereitstellt, und
wobei der erste Hochfrequenz-Haupttaktgeber (HFC1) ausgeschaltet wird, wenn Funksprechkommunikation gemäß dem zweiten Funksprechkommunikationsmodus bereitgestellt wird, und wobei der zweite Hochfrequenz-Haupttaktgeber (HFC2) ausgeschaltet wird, wenn Funksprechkommunikation gemäß dem ersten Funksprechkommunikationsmodus bereitgestellt wird.

6. Funksprechgerät mit mehreren Modi nach einem der Ansprüche 1-5, wobei der erste und der zweite Funksprechkommunikationsmodus aus einer Gruppe der folgenden Modi gewählt wird: Zellularkommunikation, Satellitenkommunikation, Bündelfunkkommunikation und Drahtlos-Kommunikation.

7. Funksprechgerät mit mehreren Modi nach einem der Ansprüche 1-6, wobei der erste Chipsatz (CS1) einen ersten Funkfrequenzschaltkreis (RF1) und der zweite Chipsatz (CS2) einen zweiten Funkfrequenzschaltkreis (RF2) beinhaltet.

8. Funksprechgerät mit mehreren Modi nach Anspruch 7:
wobei der erste Chipsatz (CS1) weiterhin einen ersten analogen Basisbandschaltkreis (ABB1), einen ersten digitalen Basisbandschaltkreis (DBB1) und einen ersten Speicher (M1) enthält.
wobei der zweite Chipsatz (CS2) weiterhin einen zweiten analogen Basisbandschaltkreis (ABB2), einen zweiten digitalen Basisbandschaltkreis (DBB2) und einen zweiten Speicher (M2) enthält.

9. Funksprechgerät mit mehreren Modi nach einem der Ansprüche 1-8, das weiterhin einen Speicher (EEPROM) umfasst, der ein gemeinsames Verzeichnis für beide Chipsätze (CS1, CS2) über die Schnittstellenschaltung (GC) enthält.

10. Verfahren zum Betreiben eines Funksprechgeräts mit mehreren Modi, das Folgendes umfasst:
Bereitstellen von Funksprechkommunikation gemäß einem ersten Funksprechkommunikationsmodus mittels eines ersten Chipsatzes (CS1), wobei der erste Chipsatz (CS1) mindestens einen integrierten Schaltungschip enthält;
Bereitstellen von Funksprechkommunikation gemäß einem zweiten Funksprechkommunikationsmodus mittels eines zweiten Chipsatzes (CS2), wobei der zweite Chipsatz (CS2) mindestens einen integrierten Schaltungschip enthält, und wobei sich der erste Chipsatz (CS1) und der zweite Chipsatz (CS2) voneinander unterscheiden;
Akzeptieren von Benutzereingaben;
Bereitstellen von Benutzerinformationen;
Verbinden der Benutzereingaben und Benutzerinformationen nach und von dem ersten Chipsatz (CS1) ohne Verbindung mit dem zweiten Chipsatz (CS2), wenn Funksprechkommunikation gemäß dem ersten Funksprechkommunikationsmodus bereitgestellt wird, und
Verbinden der Benutzereingaben und Benutzerinformationen nach und von dem zweiten Chipsatz (CS2) ohne Verbindung mit dem ersten Chipsatz (CS1), wenn Funksprechkommunikation gemäß dem zweiten Funksprechkommunikationsmodus bereitgestellt wird
**dadurch gekennzeichnet, dass**
niederfrequente Taktsignale verwendet werden, die von Niederfrequenz-Taktgebern (LFC1, LFC2) von sowohl dem ersten als auch dem zweiten Chipsatz (CS1, CS2) erzeugt werden, um eine Mikroprozesssteuerung zu synchronisieren, die die Kommunikationsweitergabe von einem Chipsatz zum nächsten koordiniert.

11. Verfahren gemäß Anspruch 10, wobei das Bereitstellen von Funksprechkommunikation gemäß dem ersten Funksprechkommunikationsmodus den Einsatz eines ersten hochfrequenten Taktsignals umfasst, das von einem ersten Hochfrequenz-Taktgeber (HFC1) erzeugt wird, und wobei das Bereitstellen von Funksprechkommunikation gemäß dem zweiten Funksprechkommunikationsmodus den Einsatz eines zweiten hochfrequenten Taktsignals umfasst, das von einem zweiten Hochfrequenz-Taktgeber (HFC2) erzeugt wird, wobei das Verfahren weiterhin Folgendes umfasst:
Ausschalten des zweiten Hochfrequenz-Taktgebers (HFC2), wenn Kommunikation gemäß dem ersten Funksprechkommunikationsmodus bereitgestellt wird, und
Ausschalten des ersten Hochfrequenz-Taktgebers (HFC2), wenn Kommunikation gemäß dem zweiten Funksprechkommunikationsmodus bereitgestellt wird.

12. Verfahren nach Anspruch 10 oder 11, das weiterhin die folgenden Schritte umfasst:
Empfangen von Klang zur Übertragung mittels des ersten Chipsatzes (CS1), wenn Funksprechkommunikation gemäß dem ersten Funksprechkommunikationsmodus bereitgestellt wird;
Empfangen von Klang zur Übertragung mittels des zweiten Chipsatzes (CS2), wenn Funksprechkommunikation gemäß dem zweiten Funksprechkommunikationsmodus bereitgestellt wird;
Erzeugen von Klang aufgrund von Funksprechkommunikation, die mittels des ersten Chipsatzes (CS1) empfangen wird, wenn Funksprechkommunikation gemäß dem ersten Funksprechkommunikationsmodus bereitgestellt wird, und
Erzeugen von Klang in Reaktion aufgrund von Funksprechkommunikation, die mittels des zweiten Chipsatzes (CS2) empfangen wird, wenn Funksprechkommunikation gemäß dem zweiten Funksprechkommunikationsmodus bereitgestellt wird.

13. Verfahren nach einem der Ansprüche 10-12, wobei der erste und der zweite Funksprechkommunikationsmodus aus einer Gruppe der folgenden Modi gewählt wird:
Zellularkommunikation, Satellitenkommunikation, Bündelfunkkommunikation und Drahtlos-Kommunikation.

14. Verfahren nach einem der Ansprüche 10-13, wobei das Verfahren weiterhin das Bereitstellen eines gemeinsamen Verzeichnisses von einem Speicher (EEPROM) für beide Chipsätze (CS1, CS2) umfasst.

15. Schnittstellenschaltung für ein Funksprechgerät mit mehreren Modi, die Folgendes umfasst: einen ersten Chipsatz (CS1), der Funksprechkommunikation gemäß dem ersten Funksprechkommunikationsmodus bereitstellt, wobei der erste Chipsatz (CS1) mindestens einen integrierten Schaltungschip enthält; einen zweiten Chipsatz (CS2), der Funksprechkommunikation gemäß dem zweiten Funksprechkommunikationsmodus bereitstellt, wobei der zweite Chipsatz (CS2) mindestens einen integrierten Schaltungschip enthält, wobei sich der erste Chipsatz (CS1) und der zweite Chipsatz (CS2) voneinander unterscheiden; eine Benutzerschnittstelle (IO), die Benutzereingaben akzeptiert und Benutzerinformationen bereitstellt, wobei die Schnittstellenschaltung Folgendes umfasst:
Mittel, um die Benutzerschnittstelle (IO) mit dem ersten Chipsatz (CS1) zu verbinden, wenn Funksprechkommunikation gemäß dem ersten Funksprechkommunikationsmodus ohne Verbindung mit dem zweiten Chipsatz (CS2) bereitgestellt wird, und
Mittel, um die Benutzerschnittstelle (IO) mit dem zweiten Chipsatz (CS2) zu verbinden, wenn Funksprechkommunikation gemäß dem zweiten Funksprechkommunikationsmodus ohne Verbindung mit dem ersten Chipsatz (CS1) bereitgestellt wird,
**dadurch gekennzeichnet ist, dass** die Schnittstellenschaltung (GC) eine Mikroprozesssteuerung umfasst, die so konzipiert ist, dass sie von Niederfrequenz-Taktgebern (LFC1, LFC2) erzeugte, niederfrequente Taktsignale von sowohl dem ersten als auch dem zweiten Chipsatz (CS1, CS2) empfangen kann, um die Mikroprozesssteuerung zu synchronisieren und so, dass sie die Kommunikationsweitergabe von einem Chipsatz zum nächsten koordinieren kann.

16. Schnittstellenschaltung gemäß Anspruch 15, wobei der erste Chipsatz (CS1) einen ersten Hochfrequenz-Haupttaktgeber (HFC1) enthält, der ein erstes Taktsignal bereitstellt, und wobei der zweite Chipsatz (CS2) einen zweiten Hochfrequenz-Haupttaktgeber (HFC2) enthält, der ein zweites Taktsignal bereitstellt, wobei der Verbindungsschaltkreis weiterhin folgendes umfasst:
Mittel zum Ausschalten des ersten Hochfrequenz-Haupttaktgebers (HFC1), wenn Funksprechkommunikation gemäß dem zweiten Funksprechkommunikationsmodus bereitgestellt wird, und
Mittel zum Ausschalten des zweiten Hochfrequenz-Haupttaktgebers (HFC2), wenn Kommunikation gemäß dem ersten Funksprechkommunikationsmodus bereitgestellt wird.

17. Schnittstellenschaltung gemäß Anspruch 15 oder 16, wobei die Schnittstellenschaltung (GC) mit einer seriellen Benutzerschnittstelle ausgestattet ist, um eine Verbindung zwischen einem Speicher (EEPROM) und den beiden Chipsätze (CS1, CS2) herstellen zu können, wobei der Speicher (EEPROM) ein gemeinsames Verzeichnis für beide Chipsätze (CS1, CS2) enthält.

## Revendications

1. Radiotéléphone multimode permettant des communications radiotéléphoniques en utilisant au moins les premier et deuxième modes de communications radiotéléphoniques, le radiotéléphone multimode comprenant :
un premier jeu de puces (CS1) permettant des communications radiotéléphoniques selon le premier mode de communications radiotéléphoniques dans lequel le premier jeu de puces (CS1) comprend au moins une puce de circuit intégré ;
un deuxième jeu de puces (CS2) permettant des communications radiotéléphoniques selon le deuxième mode de communications radiotéléphoniques dans lequel le deuxième jeu de puces (CS2) comprend au moins une puce de circuit intégré dans lequel les premier (CS1) et deuxième (CS2) jeux de puces sont différents l'un de l'autre ;
une interface utilisateur (IO) qui accepte l'entrée d'utilisateur et fournit des informations d'utilisateur ; et
un circuit de liaison (GC) qui relie l'interface utilisateur (IO) au premier jeu de puces (CS1) lors des communications radiotéléphoniques selon le premier mode de communications radiotéléphoniques sans liaison avec le deuxième jeu de puces (CS2), et qui relie l'interface utilisateur (IO) au deuxième jeu de puces (CS2) lors des communications radiotéléphoniques selon le deuxième mode de communications radiotéléphoniques sans liaison avec le premier jeu de puces (CS1), le radiotéléphone multimode étant en outre **caractérisé en ce que** ledit circuit de liaison (GC) comprend un microcontrôleur configuré pour recevoir des signaux d'horloge basse fréquence générés dans des horloges basse fréquence (LFC1, LFC2) provenant des premier et deuxième jeux de puces (CS1, CS2) pour synchroniser le microcontrôleur ; et pour coordonner des transferts de communication d'un jeu de puces à l'autre.

2. Radiotéléphone multimode selon la revendication 1 dans lequel l'interface utilisateur IO comprend :
un microphone qui accepte un son à émettre par l'intermédiaire du premier jeu de puces (CS1) lors des communications radiotéléphoniques selon le premier mode de communications radiotéléphoniques, et qui accepte un son à émettre par l'intermédiaire du deuxième jeu de puces (CS2) lors des communications radiotéléphoniques selon le deuxième mode de communications radiotéléphoniques ; et
un haut-parleur qui génère un son réagissant aux communications radiotéléphoniques reçues par l'intermédiaire du premier jeu de puces (CS1) lors des communications radiotéléphoniques selon le premier mode de communications radiotéléphoniques, et qui génère un son réagissant aux communications radiotéléphoniques reçues par l'intermédiaire du deuxième jeu de puces (CS2) lors des communications radiotéléphoniques selon le deuxième mode de communications radiotéléphoniques.

3. Radiotéléphone multimode selon la revendication 1 ou 2, comprenant en outre :
une carte de circuit (CB) dans lequel les premier et deuxième jeux de puces (CS1, CS2) sont prévus sur la carte de circuit (CB).

4. Radiotéléphone multimode selon la revendication 3 dans lequel l'interface utilisateur (IO) comprend au moins un élément parmi un clavier et un affichage, le radiotéléphone multimode comprenant en outre :
une deuxième carte de circuit séparée de la première carte de circuit (CB) dans lequel au moins un élément parmi le clavier et l'affichage est prévu sur la deuxième carte de circuit.

5. Radiotéléphone multimode selon l'une quelconque des revendications 1 à 4 :
dans lequel le premier jeu de puces (CS1) comprend une première horloge maîtresse haute fréquence (HFC1) fournissant un premier signal d'horloge ;
dans lequel le deuxième jeu de puces (CS2) comprend une deuxième horloge maîtresse haute fréquence (HFC2) fournissant un deuxième signal d'horloge ; et
dans lequel la première horloge maîtresse haute fréquence (HFC1) est désactivée lors des communications radiotéléphoniques selon le deuxième mode de communications radiotéléphoniques et dans lequel la deuxième horloge maîtresse haute fréquence (HFC2) est désactivée lors des communications radiotéléphoniques selon le premier mode de communications radiotéléphoniques.

6. Radiotéléphone multimode selon l'une quelconque des revendications 1 à 5, dans lequel les premier et deuxième modes de communications radiotéléphoniques sont sélectionnés dans le groupe constitué des modes de communications cellulaires, des modes de communications par satellite, des modes de communications à ressources partagées et des modes de communications sans fil.

7. Radiotéléphone multimode selon l'une quelconque des revendications 1 à 6 :
dans lequel le premier jeu de puces (CS1) comprend un premier circuit radiofréquence (RF1) ; et le deuxième jeu de puces (CS2) comprend un deuxième circuit radiofréquence (RF2).

8. Radiotéléphone multimode selon la revendication 7 :
dans lequel le premier jeu de puces (CS1) comprend en outre un premier circuit en bande de base analogique (ABB1), un premier circuit en bande de base numérique (DBB1), et une première mémoire (M1) ; et
dans lequel le deuxième jeu de puces (CS2) comprend en outre un deuxième circuit en bande de base analogique (ABB2), un deuxième circuit en bande de base numérique (DBB2), et une deuxième mémoire (M2).

9. Radiotéléphone multimode selon l'une quelconque des revendications 1 à 8, comprenant en outre une mémoire (EEPROM) contenant un répertoire commun pour les deux jeux de puces (CS1, CS2) par l'intermédiaire du circuit de liaison (GC).

10. Procédé d'exécution d'un radiotéléphone multimode consistant :
à permettre des communications radiotéléphoniques selon un premier mode de communications radiotéléphoniques par l'intermédiaire d'un premier jeu de puces (CS1) dans lequel le premier jeu de puces (CS1) comprend au moins une puce de circuit intégré ;
à permettre des communications radiotéléphoniques selon un deuxième mode de communications radiotéléphoniques par l'intermédiaire d'un deuxième jeu de puces (CS2) dans lequel le deuxième jeu de puces (CS2) comprend au moins une puce de circuit intégré et dans lequel les premier (CS 1) et deuxième (CS2) jeux de puces sont différents l'un de l'autre ;
à accepter l'entrée d'utilisateur ;
à fournir des informations d'utilisateur ;
à relier l'entrée d'utilisateur et les informations d'utilisateur au premier jeu de puces (CS1) et à partir de celui-ci lors des communications radiotéléphoniques selon le premier mode de communications radiotéléphoniques sans liaison avec le deuxième jeu de puces (CS2) ; et
à relier l'entrée d'utilisateur et les informations d'utilisateur au deuxième jeu de puces (CS2) et à partir de celui-ci lors des communications radiotéléphoniques selon le deuxième mode de communications radiotéléphoniques sans liaison avec le premier jeu de puces (CS1)
**caractérisé en ce qu'**il
utilise des signaux d'horloge basse fréquence générés dans des horloges basse fréquence (LFC1, LFC2) à partir des premier et deuxième jeux de puces (CS1, CS2) pour synchroniser un microcontrôleur qui coordonne des transferts de communication d'un jeu de puces à l'autre.

11. Procédé selon la revendication 10, dans lequel permettre des communications radiotéléphoniques selon le premier mode de communications radiotéléphoniques comprend l'utilisation d'un premier signal d'horloge haute fréquence généré par la première horloge haute fréquence (HFC1), et dans lequel permettre des communications radiotéléphoniques selon le deuxième mode de communications radiotéléphoniques comprend l'utilisation d'un deuxième signal d'horloge haute fréquence généré par la deuxième horloge haute fréquence (HFC2), le procédé comprenant en outre :
la désactivation de la deuxième horloge haute fréquence (HFC2) lors des communications selon le premier mode de communications radiotéléphoniques ; et
la désactivation de la première horloge haute fréquence (HFC1) lors des communications selon le deuxième mode de communications radiotéléphoniques.

12. Procédé selon la revendication 10 ou 11, comprenant en outre les étapes consistant :
à accepter un son à émettre par l'intermédiaire du premier jeu de puces (CS1) lors des communications radiotéléphoniques selon le premier mode de communications radiotéléphoniques ;
à accepter un son à émettre par l'intermédiaire du deuxième jeu de puces (CS2) lors des communications radiotéléphoniques selon le deuxième mode de communications radiotéléphoniques ;
à générer un son réagissant aux communications radiotéléphoniques reçues par l'intermédiaire du premier jeu de puces (CS1) lors des communications radiotéléphoniques selon le premier mode de communications radiotéléphoniques ; et
à générer un son réagissant aux communications radiotéléphoniques reçues par l'intermédiaire du deuxième jeu de puces (CS2) lors des communications radiotéléphoniques selon le deuxième mode de communications radiotéléphoniques.

13. Procédé selon l'une quelconque des revendications 10 à 12, dans lequel les premier et deuxième modes de communications radiotéléphoniques sont sélectionnés dans le groupe constitué des modes de communications cellulaires, des modes de communications par satellite, des modes de communications à ressources partagées et des modes de communications sans fil.

14. Procédé selon l'une quelconque des revendications 10 à 13, dans lequel ledit procédé consiste en outre à prévoir un répertoire commun issu d'une mémoire (EEPROM) pour les deux jeux de puces (CS1, CS2).

15. Circuit de liaison pour un radiotéléphone multimode comprenant un premier jeu de puces (CS1) permettant des communications radiotéléphoniques selon le premier mode de communications radiotéléphoniques dans lequel le premier jeu de puces (CS1) comprend au moins une puce de circuit intégré ; un deuxième jeu de puces (CS2) permettant des communications radiotéléphoniques selon le deuxième mode de communications radiotéléphoniques dans lequel le deuxième jeu de puces (CS2) comprend au moins une puce de circuit intégré dans lequel les premier (CS1) et deuxième (CS2) jeux de puces sont différents l'un de l'autre ; une interface utilisateur (IO) qui accepte l'entrée d'utilisateur et fournit des informations d'utilisateur, ledit circuit de liaison comprend
- un moyen pour relier l'interface utilisateur (IO) au premier jeu de puces (CS1) lors des communications radiotéléphoniques selon le premier mode de communications radiotéléphoniques sans liaison avec le deuxième jeu de puces (CS2), et
- un moyen pour relier l'interface utilisateur (IO) au deuxième jeu de puces (CS2) lors des communications radiotéléphoniques selon le deuxième mode de communications radiotéléphoniques sans liaison avec le premier jeu de puces (CS1),
**caractérisé en ce que** ledit circuit de liaison (GC) comprend un microcontrôleur configuré pour recevoir des signaux d'horloge basse fréquence générés dans des horloges basse fréquence (LFC1, LFC2) provenant des premier et deuxième jeux de puces (CS1, CS2) pour synchroniser le microcontrôleur ; et pour coordonner des transferts de communication d'un jeu de puces à l'autre.

16. Circuit de liaison selon la revendication 15, dans lequel le premier jeu de puces (CS1) comprend une première horloge maîtresse haute fréquence (HFC1) fournissant un premier signal d'horloge, et dans lequel le deuxième jeu de puces (CS2) comprend une deuxième horloge maîtresse haute fréquence (HFC2) fournissant un deuxième signal d'horloge ; le circuit de liaison comprenant en outre :
- un moyen pour désactiver la première horloge maîtresse haute fréquence (HFC1) lors des communications radiotéléphoniques selon le deuxième mode de communications radiotéléphoniques ; et
- un moyen pour désactiver la deuxième horloge maîtresse haute fréquence (HFC2) lors des communications radiotéléphoniques selon le premier mode de communications radiotéléphoniques.

17. Circuit de liaison selon la revendication 15 ou 16, dans lequel le circuit de liaison (GC) dispose d'une interface série pour permettre une connexion entre une mémoire (EEPROM) et les deux jeux de puces (CS1, CS2), ladite mémoire (EEPROM) contenant un répertoire commun pour les deux jeux de puces (CS1, CS2).
